(19) Europäisches Patentamt / European Patent Office / Office européen des brevets

(11) **EP 2 208 400 B1**

(12) **EUROPÄISCHE PATENTSCHRIFT**

(45) Veröffentlichungstag und Bekanntmachung des Hinweises auf die Patenterteilung:
**13.04.2011 Patentblatt 2011/15**

(21) Anmeldenummer: **07822633.9**

(22) Anmeldetag: **15.11.2007**

(51) Int Cl.:
*H05B 41/282* $^{(2006.01)}$    *H02M 7/48* $^{(2007.01)}$

(86) Internationale Anmeldenummer:
**PCT/EP2007/062391**

(87) Internationale Veröffentlichungsnummer:
**WO 2009/062554 (22.05.2009 Gazette 2009/21)**

(54) **UMSCHALTBARE SPANNUNGSVERSORGUNG FÜR HILFSSTROMKREISE IN EINEM STROMRICHTER**

SWITCHABLE CURRENT SUPPLY FOR AUXILIARY CURRENT CIRCUITS IN A CURRENT CONVERTER

ALIMENTATION EN COURANT COMMUTABLE POUR CIRCUITS AUXILIAIRES DANS UN CONVERTISSEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**21.07.2010 Patentblatt 2010/29**

(73) Patentinhaber: **Osram Gesellschaft mit beschränkter Haftung**
**81543 München (DE)**

(72) Erfinder:
• **FISCHER, Klaus**
  **86316 Friedberg (DE)**
• **KREITTMAYR, Josef**
  **86399 Bobingen (DE)**

(56) Entgegenhaltungen:
**EP-A- 1 231 821    EP-A- 1 729 546**
**DE-A1- 19 542 012    US-A- 4 704 542**

## Beschreibung

## Technisches Gebiet

Die vorliegende Erfindung betrifft eine Schaltungsanordnung mit einer umschaltbaren Spannungsversorgung für eine Steuervorrichtung, wobei die Schaltungsanordnung einen Gleichspannungsversorgungsanschluss zum Anschließen an eine Gleichspannungsquelle und einen Wechselspannungsversorgungsanschluss zum Anschließen an eine Wechselspannungsquelle umfasst. Sie betrifft überdies ein Verfahren zum Umschalten einer Spannungsversorgung für eine Steuervorrichtung in einer derartigen Schaltungsanordnung.

## Stand der Technik

In Schaltungsanordnungen, insbesondere elektronischen Vorschaltgeräten zum Betreiben von Entladungslampen, die nicht als freischwingender Oszillator aufgebaut sind und in denen deshalb Bauteile für die Steuerung des elektronischen Vorschaltgeräts enthalten sind, ist es erforderlich, für diese Steuerbauteile eine ausreichende, dem Betriebszustand angepasste Versorgungsleistung zur Verfügung zu stellen.

Üblicherweise gibt es zwei verschiedene Betriebszustände: Erstens den nach dem Anlegen der Versorgungsspannung zu durchlaufenden Anlaufzustand und zweitens den im Betrieb auftretenden Normalbetrieb.

Der Anlaufzustand zeichnet sich dadurch aus, dass in einfacher Weise über einen möglichst hochohmigen Anlaufwiderstand ein Versorgungskondensator geladen wird, der gleichzeitig als Puffer für die Versorgung mindestens eines Steuerbauteils dient. Erreicht die Ladespannung einen Wert, der für das Steuerbauteil ausreichend ist, beginnt dieses mit dem Betrieb und steuert beispielsweise die Transistoren des Vorschaltgeräts; der Normalbetrieb ist erreicht. In diesem Anlaufzustand benötigen Steuerbauteile wesentlich weniger Strom, den so genannten Anlaufstrom, als im Normalbetrieb.

Im Normalbetrieb wird der Pufferkondensator üblicherweise über eine Ladungspumpe geladen, um den im Normalbetrieb deutlich höheren Strombedarf der Steuerbauteile zur Verfügung zu stellen. Diese Ladungspumpe umfasst üblicherweise zwei Dioden und einen Kondensator, der einerseits an ein Potential mit hohem Wechselspannungsanteil, beispielsweise den Halbbrückenmittelpunkt einer als Halbbrücke ausgelegten Brückenschaltung, und andererseits an die beiden Dioden gekoppelt ist.

In aufwändigeren Vorschaltgeräten gibt es eine Vielzahl von Steuerbauteilen, die im Normalbetrieb mit Leistung versorgt werden müssen, deren Stromzufuhr aber während des Anlaufzustands unterbrochen werden muss, um den zum Aufladen des Versorgungskondensators erforderlichen Strom möglichst klein zu halten und damit die Verluste im Anlaufwiderstand im Betrieb zu minimieren.

In bestimmten Fällen kann es nun erforderlich sein, den Betrieb des Vorschaltgeräts anzuhalten, aber dennoch zumindest einzelne Teile der Steuerschaltung mit Strom zu versorgen. Dies kann beispielsweise der Fall sein, wenn der Betrieb des Vorschaltgeräts wegen zu geringer Versorgungsspannung angehalten und das Gerät in einen Schlafmodus versetzt werden muss, bei wieder ausreichender Spannung aber wieder gestartet werden muss. Andere mögliche Kriterien wären beispielsweise ein von einer Bedienperson oder von einer Zeitautomatik bewirkter Ausschaltvorgang. Die Feststellung eines wieder ausreichenden Wertes für die Versorgungsspannung oder eine von einer Bedienperson oder einer Zeitautomatik gewünschte erneute Inbetriebnahme muss durch ein Steuerbauteil, wie zum Beispiel einen Microcontroller, erfolgen, das zu diesem Zweck auch in diesem Schlafmodus mit einem geringen Strom versorgt werden muss.

Die europäische Patentanmeldung EP 1 231 821 A1 zeigt ein Vorschaltegerät zum Betrieb von elektrischen Lampen, bei dem der Mikrocontroller mit Hilfe eines Gleichspannungswandlers auch im Stand-By-Betrieb versorgt wird.

Die deutsche Offenlegungsschrift DE 195 42 012 A1 zeigt eine Schaltungsanordnung zum Betrieb von Leuchtstofflampen, bei der während des Hochlaufs eine Hilfsspeisespannung über eine Widerstandsanordnung der gleichgerichteten Netzspannung entnommen wird.

## Darstellung der Erfindung

Die Aufgabe der vorliegenden Erfindung besteht deshalb darin, eine Schaltungsanordnung der eingangs genannten Art bzw. ein Verfahren der eingangs genannten Art derart weiterzubilden, dass die Schaltungsanordnung bei Erfüllung hier nicht relevanter Kriterien durch eine Steuervorrichtung in einen Schlafmodus versetzt und in diesem gehalten werden kann. Sobald die Kriterien nicht mehr erfüllt sind, soll die Steuervorrichtung die Wiederaufnahme des Betriebs der Schaltungsanordnung bewirken.

Diese Aufgabe wird gelöst durch eine Schaltungsanordnung mit den Merkmalen von Patentanspruch 1 sowie durch ein Verfahren mit den Merkmalen von Patentanspruch 14.

Der vorliegenden Erfindung liegt die Erkenntnis zugrunde, dass die Aufgabe gelöst werden kann, wenn zum Anhalten des Normalbetriebs, d. h. für das Erreichen des Schlafmodus, die Versorgungsspannung der Ansteuerschaltung, die zur Ansteuerung der Schalter eines Inverters dient, mit einem Schalter unter einen Schwellwert gezogen wird, bei dem die Ansteuerschaltung in einen inaktiven Zustand, in den so genannten Under-Voltage-Lock-Out, übergeht. Eine Ladungspumpe, deren Eingang mit einer Wechselspannungsquelle des Inverters gekoppelt ist, stellt dadurch keinen Strom mehr zur Versorgung anderer Steuerbauteile zur Verfügung. Gleichzeitig wird dann über diesen Schalter ein Versorgungspfad freigeschaltet, über den Strom über den Anlaufwiderstand an das Versorgungspotential der Steuervorrichtung zu dessen Leistungsversorgung geleitet wird.

Dies wird erreicht, indem eine gattungsgemäße Schaltungsanordnung weiterhin umfasst: einen ersten Kondensator, der oben als Versorgungskondensator bezeichnet wurde, dessen erster Anschluss über einen ersten ohmschen Widerstand, dem sogenannten Anlaufwiderstand, unter Ausbildung eines ersten Verbindungspunkts mit dem Gleichspannungsversorgungsanschluss gekoppelt ist, und dessen zweiter Anschluss mit einem Bezugspotential gekoppelt ist; eine Ansteuerschaltung zur Ansteuerung der Schalter eines Inverters, wobei die Ansteuerschaltung einen Versorgungsanschluss aufweist, der mit dem ersten Verbindungspunkt gekoppelt ist; eine Ladungspumpe, deren Eingang mit dem Wechselspannungsversorgungsanschluss und deren Ausgang mit dem ersten Verbindungspunkt gekoppelt ist, wobei der Wechselspannungsversorgungsanschluss mit einer Wechselspannungsquelle gekoppelt ist, die erst dann eine Wechselspannung bereitstellt, wenn der Inverter in Betrieb ist; eine Steuervorrichtung, wobei die Steuervorrichtung mindestens einen Eingang, einen Ausgang und mindestens einen Versorgungsanschluss umfasst; einen ersten, einen zweiten und einen dritten elektronischen Schalter mit jeweils einer Steuerelektrode, einer Bezugselektrode und einer Arbeitselektrode, wobei die Bezugselektrode des ersten und des zweiten elektronischen Schalters mit dem ersten Verbindungspunkt gekoppelt ist, wobei die Arbeitselektrode des ersten elektronischen Schalters mit dem Versorgungsanschluss der Steuervorrichtung gekoppelt ist, wobei die Steuerelektrode des ersten elektronischen Schalters über eine erste Spannungsbegrenzungsvorrichtung mit dem Bezugspotential gekoppelt ist, wobei die Steuerelektrode des ersten elektronischen Schalters mit der Arbeitselektrode des dritten elektronischen Schalters gekoppelt ist, wobei die Steuerelektrode des dritten elektronischen Schalters mit dem Ausgang der Steuervorrichtung und die Bezugselektrode des dritten elektronischen Schalters mit dem Bezugspotential gekoppelt ist, wobei die Steuerelektrode des zweiten elektronischen Schalters über eine zweite Spannungsbegrenzungsvorrichtung mit dem Bezugspotential gekoppelt ist, wobei die Arbeitselektrode des zweiten elektronischen Schalters über eine erste Diode mit dem Versorgungsanschluss der Steuervorrichtung gekoppelt ist, und wobei mindestens ein weiterer Verbraucher, insbesondere die oben erwähnten weiteren Steuerbauteile, mit der Arbeitselektrode des zweiten elektronischen Schalters gekoppelt ist.

Bevorzugt ist die Durchbruchspannung der ersten Spannungsbegrenzungsvorrichtung kleiner als die Durchbruchspannung der zweiten Spannungsbegrenzungsvorrichtung. Dadurch wird sichergestellt, dass, wenn der erste elektronische Schalter leitet, der zweite elektronische Schalter sperrt.

Es ist weiterhin bevorzugt, dass die Ansteuerschaltung einen Anlaufstrom aufweist, wobei der erste ohmsche Widerstand kleiner/gleich dem Quotienten aus der minimalen Spannung der am Gleichspannungsversorgungsanschluss anzuschließenden Gleichspannungsquelle und dem maximalen Anlaufstrom ist. Hierbei ist zu berücksichtigen, dass die Ansteuerschaltung auch bei Spannungen am ersten Kondensator, die noch nicht zu einem Anlaufen der Ansteuerschaltung führen (Under-Voltage-Lock-Out), dennoch Strom aufnimmt. In dieser Phase wird außerdem Strom von der Steuervorrichtung aufgenommen. Ist die Summe dieser beiden Ströme klein, so besteht die Möglichkeit, ohne eine separate Abschaltung der Ansteuerschaltung diese über den ersten ohmschen Widerstand, den so genannten Anlaufwiderstand, zu versorgen. Braucht die Ansteuerschaltung und/oder die Steuervorrichtung im Schlafmodus der Schaltungsanordnung jedoch zuviel Strom, ist eine separate Abschaltung der Ansteuerschaltung, wie sie weiter unten unter Einführung eines dazu nötigen vierten elektronischen Schalters näher beschrieben ist, vorteilhafter.

Bevorzugt ist zur Strecke Arbeitselektrode - Bezugspotential des zweiten elektronischen Schalters ein zweiter Kondensator parallel geschaltet. Aus diesem können dann die weiteren Verbraucher und im Normalbetrieb auch die Steuervorrichtung mit Leistung versorgt werden.

Eine bevorzugte Weiterbildung zeichnet sich, wie bereits oben kurz erwähnt, dadurch aus, dass die Schaltungsanordnung weiterhin einen vierten elektronischen Schalter mit einer Steuerelektrode, einer Bezugselektrode und einer Arbeitselektrode umfasst, wobei die Strecke Bezugselektrode - Arbeitselektrode des vierten elektronischen Schalters zwischen den ersten Verbindungspunkt und den Versorgungsanschluss der Ansteuerschaltung gekoppelt ist, wobei die Steuerelektrode des vierten elektronischen Schalters über die Serienschaltung einer dritten Spannungsbegrenzungsvorrichtung und eines zweiten ohmschen Widerstands mit dem Bezugspotential gekoppelt ist. Dies ermöglicht die bereits oben kurz angesprochene Variante, die verhindert, dass im Schlafmodus ein zu großer Strom in die Ansteuerschaltung abfließt und deshalb kein ausreichend großer Strom mehr für die Steuervorrichtung zur Verfügung gestellt werden kann.

Mit $U_{D2}$ als Durchbruchspannung der ersten Spannungsbegrenzungsvorrichtung, $U_{D4}$ als Durchbruchspannung der zweiten Spannungsbegrenzungsvorrichtung und $U_{D1}$ als Durchbruchspannung der dritten Spannungsbegrenzungsvorrichtung gilt bevorzugt

$$U_{D2} \; < \; U_{D1} \; < \; U_{D4}.$$

Diese Maßnahme stellt sicher, dass beim Anlaufen zunächst die Ansteuerschaltung mit Energie versorgt wird und erst nach dem Hochlaufen des Inverters die Steuervorrichtung sowie die übrigen Verbraucher. Im Schlafmodus hingegen wird dadurch sichergestellt, dass die Ansteuerschaltung sowie die übrigen Verbraucher mit keiner Energie versorgt werden, vielmehr über einen nunmehr neuen Strompfad lediglich die Steuervorrichtung.

Bevorzugt ist der Inverter als Halbbrückenschaltung ausgebildet, wobei der Halbbrückenmittelpunkt die Wechselspannungsquelle darstellt.

Es kann weiterhin eine vierte Spannungsbegrenzungsvorrichtung vorgesehen sein, die zwischen den ersten ohmschen Widerstand und den ersten Kondensator gekoppelt ist, wobei die Bezugselektrode des vierten elektronischen Schalters mit dem Verbindungspunkt des ersten ohmschen Widerstands und der vierten Spannungsbegrenzungsvorrichtung gekoppelt ist, wobei der Ausgang der Ladungspumpe, die Bezugselektrode des ersten elektronischen Schalters und die Bezugselektrode des zweiten elektronischen Schalters mit dem Verbindungspunkt der vierten Spannungsbegrenzungsvorrichtung und des ersten Kondensators gekoppelt sind. Diese Ausführungsform trägt dem Umstand Rechnung, dass es vorkommen kann, dass die Differenz aus der Spannung, bei der die Ansteuerschaltung den Betrieb aufnimmt, und der Maximalspannung, auf die die Ansteuerschaltung die Spannung am ersten Kondensator klemmt, zu gering ist, so dass es nicht mehr möglich ist, einen geeigneten Wert für die Zenerspannung der Zenerdiode, die bevorzugt als zweite Spannungsbegrenzungsvorrichtung verwendet wird, zu finden. Die Zenerspannung der Zenerdiode, die als zweite Spannungsbegrenzungsvorrichtung verwendet wird, und damit die Spannung am ersten Kondensator, bei deren Überschreiten der zweite elektronische Schalter leitend wird, muss einerseits nämlich deutlich über der Schwellspannung liegen, ab der die Ansteuerschaltung arbeitet, und andererseits deutlich unter der Klemmspannung der Ansteuerschaltung. Gemäß dieser Ausführungsform wird daher eine vierte Spannungsbegrenzungsvorrichtung, insbesondere eine vierte Zenerdiode, in Serie zu der Versorgungsleitung für die Ansteuerschaltung geschaltet. Durch diese Zenerdiode kann die oben genannte Differenz erhöht werden. Für eine einwandfreie Funktion ist es von Vorteil, den ersten ohmschen Widerstand nicht direkt mit dem ersten Kondensator zu verbinden, sondern an die Anode der Zenerdiode, die als vierte Spannungsbegrenzungsvorrichtung wirkt, zu schalten.

Für eine zuverlässige Versorgung der Steuereinrichtung mit einer Versorgungsspannung ist zwischen die Arbeitselektrode des ersten elektronischen Schalters und den Versorgungsanschluss der Steuervorrichtung bevorzugt ein Spannungsregler gekoppelt.

Bevorzugt ist weiterhin die erste, die zweite, die dritte und die vierte Spannungsbegrenzungsvorrichtung als Zenerdiode realisiert. Realisierungen, in denen die erste, die zweite, die dritte und die vierte Spannungsbegrenzungsvorrichtung durch Transistoren oder Transistorschaltungen realisiert sind, sind ebenso möglich, jedoch teurer.

Bevorzugt ist die erste Spannungsbegrenzungsvorrichtung seriell zwischen die Steuerelektrode des ersten elektronischen Schalters und die Arbeitselektrode des dritten elektronischen Schalters gekoppelt. Dabei ist der dritte elektronische Schalter bevorzugt als Bipolartransistor ausgeführt.

In einer Alternative hierzu ist weiterhin ein dritter ohmscher Widerstand vorgesehen, der zwischen die Steuerelektrode des ersten elektronischen Schalters und die Arbeitselektrode des dritten elektronischen Schalters gekoppelt ist, wobei der dritte elektronische Schalter als MOSFET ausgebildet ist, wobei die erste Spannungsbegrenzungsvorrichtung einerseits mit dem Verbindungspunkt des dritten ohmschen Widerstands und der Arbeitselektrode des dritten elektronischen Schalters und andererseits mit dem ersten Verbindungspunkt gekoppelt ist. Während bei einer Realisierung des dritten elektronischen Schalters als Bipolartransistor die Steuervorrichtung den Basisstrom an den dritten elektronischen Schalter zur Verfügung stellen muss, damit dieser eingeschaltet bleibt, muss bei Realisierung des dritten elektronischen Schalters als MOSFET dessen Gate nur einmal aufgeladen werden. Die zuletzt genannte Ausführungsform zeichnet sich deshalb durch einen besonders niedrigen Stromverbrauch aus.

Bei der Ausführungsform, in der der dritte elektronische Schalter als Bipolartransistor ausgebildet ist, kann zwischen die Steuerelektrode des dritten elektronischen Schalters und den Ausgang der Steuervorrichtung ein vierter ohmscher Widerstand gekoppelt sein. Dieser stellt sicher, dass der Ausgang der Steuervorrichtung nicht auf die Basis-Emitter-Spannung des dritten elektronischen Schalters geklemmt wird.

Weitere vorteilhafte Ausführungsformen ergeben sich aus den Unteransprüchen.

Die mit Bezug auf die erfindungsgemäße Schaltungsanordnung vorgestellten bevorzugten Ausführungsformen und deren Vorteile gelten entsprechend, soweit anwendbar, für das erfindungsgemäße Verfahren.

## Kurze Beschreibung der Zeichnung(en)

Im Nachfolgenden werden Ausführungsbeispiele einer erfindungsgemäßen Schaltungsanordnung unter Bezugnahme auf die beigefügten Zeichnungen näher beschrieben. Es zeigen:

Fig. 1 in schematischer Darstellung ein erstes Ausfüh- rungsbeispiel einer erfindungsgemäßen Schaltungs- anordnung;

Fig. 2 in schematischer Darstellung ein zweites Ausfüh- rungsbeispiel einer erfindungsgemäßen Schaltungs- anordnung;

Fig. 3    in schematischer Darstellung ein drittes Ausfüh- rungsbeispiel einer erfindungsgemäßen Schaltungs- anordnung;

Fig. 4    in schematischer Darstellung ein viertes Ausfüh- rungsbeispiel einer erfindungsgemäßen Schaltungs- anordnung; und

Fig. 5    den zeitlichen Verlauf einiger elektrischer Größen für die Ausführungsform von Fig. 1.

**Bevorzugte Ausführung der Erfindung**

In den verschiedenen Ausführungsbeispielen werden für gleiche und gleichwirkende Elemente dieselben Bezugszeichen verwendet.

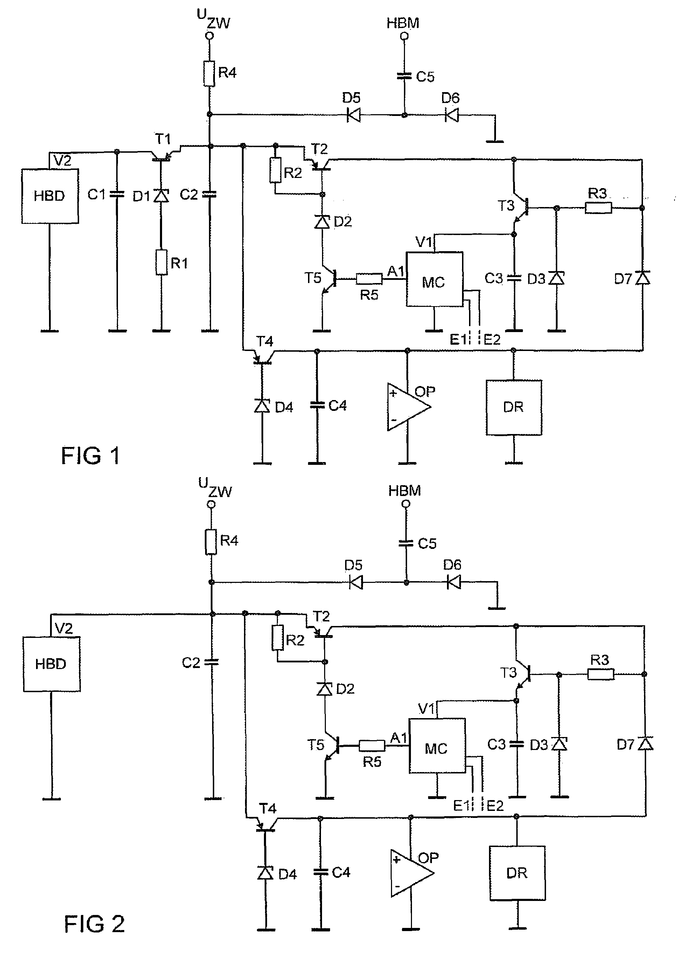

Fig. 1 zeigt ein erstes Ausführungsbeispiel einer erfindungsgemäßen Schaltungsanordnung. Unter der Bezeichnung OP sind analoge Verbraucher, unter der Bezeichnung DR digitale Verbraucher zusammengefasst. Sie umfassen die eingangs erwähnten Steuerbauteile.

Zunächst wird der Kondensator C2 über den Anlaufwiderstand R4 aus einer Gleichspannungsquelle, die insbesondere die Zwischenkreisspannung $U_{zw}$ darstellen kann, langsam aufgeladen. Die Transistoren T1 und T4 sind nicht-leitend, solange die Spannung am Kondensator C2 nicht die Zenerspannung der Zenerdioden D1, die den Transistor T1 einschaltet, bzw. D4, die den Transistor T4 einschaltet, überschreitet. Seriell zur Zenerdiode D1 ist ein ohmscher Widerstand R1 angeordnet, damit die Emitterspannung des Transistors T1 nicht hart geklemmt wird.

Die Einschaltspannung für den Transistor T1, die im Wesentlichen der Zenerspannung der Zenerdiode D1 entspricht (in den nachfolgenden Betrachtungen wird zur Erleichterung des Verständnisses der kleine Anteil aufgrund des Basis-Emitter-Übergangs des jeweils zugeordneten Transistors vernachlässigt), wird so gewählt, dass sie kleiner als die Spannung ist, bei der ein Halbbrückentreiber HBD seinen Betrieb aufnimmt . Der Halbbrückentreiber HBD wird über einen Versorgungsanschluss V2 mit Spannung versorgt. Die Einschaltspannung für den Transistor T4, die im Wesentlichen der Zenerspannung der Zenerdiode D4 entspricht, wird so gewählt, dass sie größer als die Spannung ist, bei der der Halbbrückentreiber HBD seinen Betrieb aufnimmt. Dadurch ist gewährleistet, dass die Verbraucher OP, DR erst dann mit Spannung versorgt werden, wenn eine Ladungspumpe, die die Dioden D5 und D6 sowie den Kondensator C5 umfasst, als Stromquelle arbeitet und damit genügend Versorgungsleistung verfügbar ist. Zu diesem Zweck ist der Wechselspannungsversorgungsanschluss HBM der Ladungspumpe D5, D6, C5 mit dem Halbbrückenmittelpunkt einer Halbbrückenschaltung verbunden.

Der Transistor T2 ist nicht-leitend, solange der Transistor T5 ausgeschaltet ist.

Die Versorgung eines Microcontrollers MC, der als Steuervorrichtung wirkt, erfolgt im Normalbetrieb der Schaltungsanordnung aus dem Kondensator C2, über den Transistor T4, die Diode D7 und einen Spannungsregler, der einen Transistor T3, eine Diode D3, einen Widerstand R3 und einen Kondensator C3 umfasst, aus der durch die Ladungspumpe D5, D6, C5 bereitgestellten Versorgungsspannung. Um die Schaltungsanordnung aufgrund von an den Eingängen E1, E2 des Microcontrollers MC empfangenen Signalen in einen Schlafmodus zu versetzen, wird der Transistor T5 vom Microcontroller MC über seinen Ausgang A1 eingeschaltet. Dadurch klemmt die Zenerdiode D2 über den Transistor T2 die Spannung über dem Kondensator C2 auf einen Wert, der im Wesentlichen der Zenerspannung der Zenerdiode D2 entspricht.

Diese durch die Zenerdiode D2 definierte Klemmspannung liegt unter den Zenerspannungen der Zenerdiode D1 und der Zenerdiode D4, wodurch sowohl der Halbbrückentreiber HBD als auch die restlichen Verbraucher OP, DR stromlos geschaltet werden. Die Ladungspumpe D5, D6, C5 arbeitet dann nicht mehr, weil das Potential, an das C5 angeschlossen ist, keinen auskoppelbaren Wechselspannungsanteil mehr aufweist.

Über den Transistor T2 wird der gesamte, durch den ohmschen Widerstand R4 zur Verfügung stehende Strom dem Microcontroller MC zur Verfügung gestellt, der diesen im Schlafzustand der Schaltungsanordnung ausreichend versorgt. Die Diode D7 verhindert dabei, dass Teile des durch den ohmschen Widerstand R4 fließenden Stroms in die anderen Verbraucher OP, DR abfließen können, da diese im Schlafzustand in Sperrrichtung gepolt ist. Auch in diesem Schlafzustand des Vorschaltgeräts, in dem der Microcontroller MC über den ohmschen Widerstand R4 versorgt wird, regelt der aus dem Transistor T3, dem ohmschen Widerstand R3, der Diode D3 und dem Kondensator C3 gebildete Spannungsregler die Versorgungsspannung für den Microcontroller MC, die diesem am Versorgungsanschluss V1 zugeführt wird.

Zwischen dem Ausgang A1 des Microcontrollers MC und der Steuerelektrode des Transistors T5 ist ein ohmscher Widerstand R5 angeordnet, der dafür sorgt, dass der Ausgang des Microcontrollers MC nicht auf die Basis-Emitter-Spannung des Transistors T5 geklemmt wird.

Ein ohmscher Widerstand R2, der parallel zur Strecke Bezugselektrode - Steuerelektrode des Transistors T2 angeordnet ist, verhindert ein unabsichtliches Einschalten des Transistors T2.

In einem bevorzugten Ausführungsbeispiel beträgt die Zenerspannung der Diode D1 12 V, die Zenerspannung der Diode D4 15 V und die Zenerspannung der Diode D2 8 V.

Die in Fig. 2 dargestellte Ausführungsform einer erfindungsgemäßen Schaltungsanordnung ist gegenüber der Ausführungsform von Fig. 1 vereinfacht, dadurch dass der Transistor T1, die Diode D1, der ohmsche Widerstand R1 sowie der Kondensator C1 weggefallen sind. Auf die zuletzt genannten Bauelemente, die ein aktives Abschalten des Halbbrückentreibers HBD ermöglichen, kann verzichtet werden, wenn die Summe aus dem Anlaufstrom des Halbbrückentreibers HBD und dem im Schlafmodus für den Microcontroller MC erforderlichen Strom klein genug ist, um über den Anlaufwiderstand R4 geführt zu werden. Dies berücksichtigt, dass der Halbbrückentreiber HBD auch in seinem ausgeschalteten Zustand Strom verbraucht, wenn an seinem Versorgungsanschluss V2 eine Spannung anliegt, die so klein ist, dass sich der Halbbrückentreiber HBD im Under-Voltage-Lock-Out-Betrieb befindet. Ist dieser Stromverbrauch zu hoch, ist die Ausführungsform von Fig. 1 zu bevorzugen.

Ist die Differenz aus der Spannung, bei der der Halbbrückentreiber HBD seinen Betrieb aufnimmt, und der Maximalspannung, auf die er die Versorgungsspannung, d. h. die Spannung am Kondensator C2, klemmt, zu gering, ist es nicht mehr möglich, einen geeigneten Wert für die Zenerspannung der Zenerdiode D4 zu finden. Die Zenerspannung der Zenerdiode D4 und damit die Spannung am Kondensator C2, bei deren Überschreiten der Transistor T4 leitend wird, muss einerseits deutlich über der Schwellspannung liegen, ab der der Halbbrückentreiber HBD arbeitet, der so genannten Under-Voltage-Lock-Out-Schwelle, und andererseits deutlich unter der Klemmspannung des Halbbrückentreibers HBD.

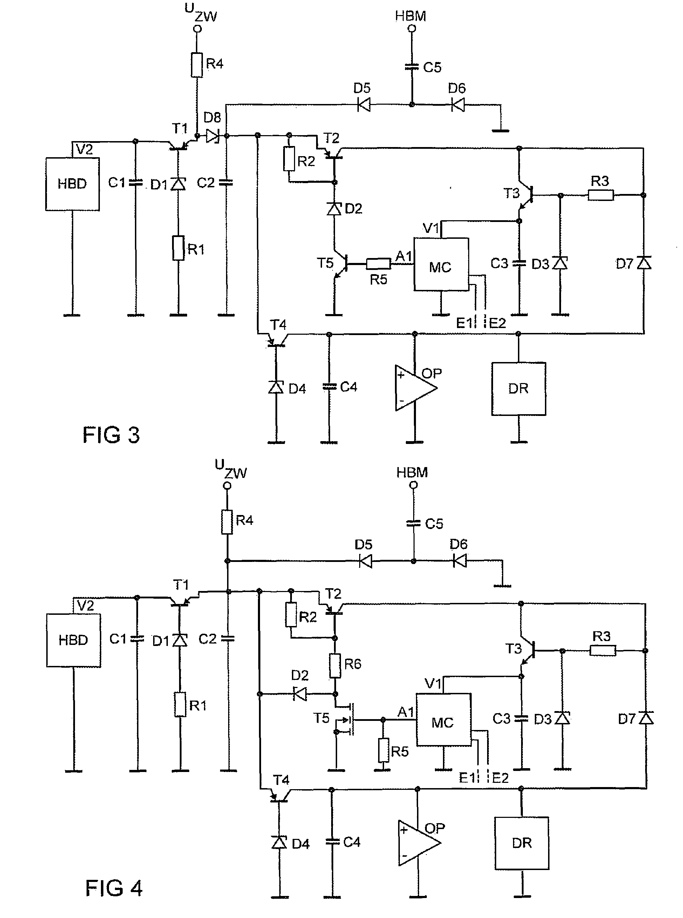

Bei der Ausführungsform gemäß Fig. 3 wird deshalb eine weitere Zenerdiode D8 in Serie zu der Versorgungsleitung für den Halbbrückentreiber HBD geschaltet. Durch diese Zenerdiode D8 kann die oben genannte Differenz erhöht werden. Für eine einwandfreie Funktion ist es von Vorteil, den Anlaufwiderstand R4 nicht direkt mit dem Kondensator C2, sondern an die Anode der Zenerdiode D8 zu schalten. Die Klemmwirkung des Halbbrückentreibers HBD ergibt sich aufgrund einer nicht dargestellten, im Halbbrückentreiber angeordneten Zenerdiode. Diese wirkt, wenn der Transistor T1 eingeschaltet ist. Vom Kondensator C2 aus gesehen wirkt demnach als Klemmspannung die Summe aus der Klemmspannung der Zenerdiode D8 und der Klemmspannung der internen Zenerdiode (nicht dargestellt) des Halbbrückentreibers HBD.

Die Ausführungsform von Fig. 4 zeichnet sich dadurch aus, dass sie einen niedrigeren Strom durch den Anlaufwiderstand R4 benötigt als die drei anderen Ausführungsformen. Dazu ist der Transistor T5 als MOSFET-Transistor realisiert, wobei der ohmsche Widerstand R5 nunmehr zwischen den Ausgang A1 des Microcontrollers MC und das Bezugspotential gekoppelt ist. Die Anordnung des Widerstands R5 von Fig. 4 stellt sicher, dass der Transistor T5 nicht unbeabsichtigt eingeschaltet werden kann. Der Widerstand R5 stellt sicher, dass der Transistor T5 nur eingeschaltet wird, wenn der Ausgang A1 des Microcontrollers MC auf Active High ist. Überdies ist ein ohmscher Widerstand R6 vorgesehen, der seriell zwischen die Steuerelektrode des Transistors T2 und die Arbeitselektrode des Transistors T5 gekoppelt ist. Mit der Arbeitselektrode des Transistors T5 ist die Zenerdiode D2 gekoppelt, wodurch der Kondensator C2 im eingeschalteten Zustand des Transistors T5 über die Zenerdiode D2 geklemmt wird. Dabei ist der am ohmschen Widerstand R2 abfallende Spannungsanteil so groß, dass der Transistor T2 leitend bleibt. Dadurch kann die Basis am Transistor T2 auf kleinere Werte sinken, wobei der Transistor T2 dann immer noch eingeschaltet bleibt.

Im Vergleich zu den anderen Ausführungsformen muss das Gate des als MOSFET ausgebildeten Transistors T5 nur einmal aufgeladen werden; der Transistor T5 verbraucht weiterhin keinen Strom. Im Gegensatz hierzu verbraucht der als Bipolartransistor ausgebildete Transistor T5 der drei anderen Ausführungsbeispiele einen gewissen Basisstrom, damit er eingeschaltet bleibt. Diesen Basisstrom muss der Microcontroller MC zur Verfügung stellen und dies ist selbstverständlich nur möglich, wenn dieser Strom dem Microcontroller MC zugeführt wird.

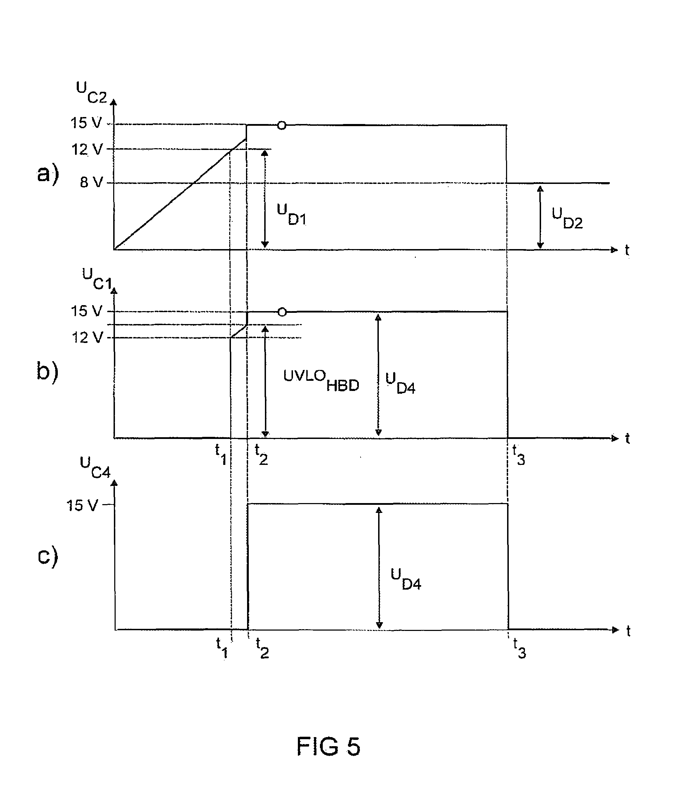

Zur Erklärung der Funktionsweise einer erfindungsgemäßen Schaltungsanordnung wird auf Fig. 5 Bezug genommen. Diese zeigt schematisch den zeitlichen Verlauf der Spannungen an den Kondensatoren C1, C2 und C4 für das Ausführungsbeispiel von Fig. 1.

Für die nachfolgenden Ausführungen ist weiterhin angenommen, dass die Zenerspannung der Zenerdiode D1 12 V, die Zenerspannung der Zenerdiode D2 8 V und die Zenerspannung der Zenerdiode D4 15 V beträgt.

Zunächst wird der Kondensator C2 über den ohmschen Widerstand R4 allmählich aufgeladen. Die Spannung $U_{C2}$ steigt langsam an.

Sobald die Spannung $U_{C2}$ 12 V zum Zeitpunkt $t_1$ erreicht hat, geht der Transistor T1 in den leitenden Zustand über. Die Spannung am Kondensator C1 steigt ebenfalls auf 12 V und steigt anschließend synchron mit der Spannung am Kondensator C2 weiter. Zum Zeitpunkt $t_2$ hat die Spannung am Kondensator C1 einen Wert erreicht, der über der Under-Voltage-Lock-Out-Spannung des Halbbrückentreibers HBD liegt. Dadurch wird der Halbbrückentreiber HBD in Betrieb gesetzt, wodurch die Ladungspumpe ihren Betrieb aufnimmt und die Spannung am Kondensator C2 und damit die Spannung am Kondensator C1 weiter steigt. Aufgrund der Zenerdiode D4 wird die Spannung an den Kondensatoren C1, C2 auf die Zenerspannung der Zenerdiode D4 geklemmt. Sobald die Spannung am Kondensator C2 die Zenerspannung der Zenerdiode D4 erreicht hat, schaltet der Transistor T4 ein, wodurch die Spannung am Kondensator C4 auf 15 V steigt.

Zum Zeitpunkt $t_3$ liegen den Eingängen E1, E2 des Microcontrollers MC Kriterien vor, die dazu führen, dass der Microcontroller MC die Schaltungsanordnung in den Schlafmodus versetzt. Dazu schaltet er den Transistor T5 ein, wodurch der Transistor T2 leitend geschaltet wird. Dadurch wird die Spannung am Kondensator C2 auf die Zenerspannung der Zenerdiode D2 geklemmt, siehe Fig. 5a. Die Transistoren T1 und T4 sperren. Dadurch sinkt die Spannung am Kondensator C1 und die Spannung am Kondensator C4 auf Null. Die Verbraucher OP und DR werden ebenso wie der Halbbrückentreiber HBD nicht mehr mit Strom versorgt. Im Gegensatz hierzu wird lediglich der Microcontroller MC über den ohmschen Widerstand R4 und den Transistor T2 mit Energie versorgt.

**Patentansprüche**

1. Schaltungsanordnung mit einer umschaltbaren Spannungsversorgung für eine Steuervorrichtung, wobei die Schaltungsanordnung umfasst:

   - einen Gleichspannungsversorgungsanschluss ($U_{ZW}$) zum Anschließen an eine Gleichspannungsquelle; und
   - einen Wechselspannungsversorgungsanschluss (HBM) zum Anschließen an eine Wechselspannungsquelle;
   - einen ersten Kondensator (C2), dessen erster Anschluss über einen ersten ohmschen Widerstand (R4) unter Ausbildung eines ersten Verbindungspunkts mit dem Gleichspannungsversorgungsanschluss ($U_{ZW}$) gekoppelt ist, und dessen zweiter Anschluss mit einem Bezugspotential gekoppelt ist;
   - eine Ansteuerschaltung (HBD) zur Ansteuerung der Schalter eines Inverters, wobei die Ansteuerschal-tung (HBD) einen Versorgungsanschluss (V2) aufweist, der mit dem ersten Verbindungspunkt gekoppelt ist;
   - eine Steuervorrichtung (MC), wobei die Steuervorrichtung (MC) mindestens einen Eingang (E1; E2), einen Ausgang (A1) und mindestens einen Versorgungsanschluss (V1) umfasst;

   **dadurch gekennzeichnet, dass** die Schaltungsanordnung weiterhin umfasst:
   - eine Ladungspumpe (D5, D6, C5), deren Eingang mit dem Wechselspannungsversorgungsanschluss (HBM) und deren Ausgang mit dem ersten Verbindungspunkt gekoppelt ist, wobei der Wechselspannungsversorgungsanschluss mit einer Wechselspannungquelle gekoppelt ist, die erst dann eine Wechselspannung bereitstellt, wenn der Inverter in Betrieb ist;
   - einen ersten (T2), einen zweiten (T4) und einen dritten (T5) elektronischen Schalter mit jeweils einer Steuerelektrode, einer Bezugselektrode und einer Arbeitselektrode, wobei die Bezugselektrode des ersten (T2) und des zweiten (T4) elektronischen Schalters mit dem ersten Verbindungspunkt gekoppelt ist;
   - wobei die Arbeitselektrode des ersten elektronischen Schalters (T2) mit dem Versorgungsanschluss (V1) der Steuervorrichtung (MC) gekoppelt ist;
   - wobei die Steuerelektrode des ersten elektronischen Schalters (T2) über eine erste Spannungsbegrenzungsvorrichtung (D2) mit dem Bezugspotential gekoppelt ist,
   - wobei die Steuerelektrode des ersten elektronischen Schalters (T2) mit der Arbeitselektrode des dritten elektronischen Schalters (T5) gekoppelt ist, wobei die Steuerelektrode des dritten elektronischen Schalters (T5) mit dem Ausgang (A1) der Steuervorrichtung (MC) und die Bezugselektrode des dritten elektronischen Schalters (T5) mit dem Bezugspotential gekoppelt ist;
   - wobei die Steuerelektrode des zweiten elektronischen Schalters (T4) über eine zweite Spannungsbegrenzungsvorrichtung (D4) mit dem Bezugspotential gekoppelt ist;
   - wobei die Arbeitselektrode des zweiten elektronischen Schalters (T4) über eine erste Diode (D7) mit dem Versorgungsanschluss (V1) der Steuervorrichtung (MC) gekoppelt ist; und
   - wobei mindestens ein weiterer Verbraucher (OP; DR) mit der Arbeitselektrode des zweiten elektronischen Schalters (T4) gekoppelt ist.

2. Schaltungsanordnung nach Anspruch 1,
   **dadurch gekennzeichnet,**
   **dass** die Durchbruchspannung der ersten Spannungsbegrenzungsvorrichtung (D2) kleiner ist als die Durchbruchspannung der zweiten Spannungsbegrenzungsvorrichtung (D4).

3. Schaltungsanordnung nach einem der Ansprüche 1 oder 2,
   **dadurch gekennzeichnet,**
   **dass** die Ansteuerschaltung (HBD) einen Anlaufstrom aufweist, wobei der erste ohmsche Widerstand (R4) kleiner gleich dem Quotienten aus der minimalen Spannung der am Gleichspannungsversorgungsanschluss ($U_{ZW}$) anzuschließenden Gleichspannungsquelle und dem maximalen Anlaufstrom ist.

4. Schaltungsanordnung nach einem der vorhergehenden Ansprüche,
   **dadurch gekennzeichnet,**
   **dass** der Strecke Arbeitselektrode - Bezugspotential des zweiten elektronischen Schalters (T4) ein zweiter Kondensator (C4) parallel geschaltet ist.

5. Schaltungsanordnung nach einem der vorhergehenden Ansprüche,
   **dadurch gekennzeichnet,**
   **dass** die Schaltungsanordnung weiterhin einen vierten elektronischen Schalter (T1) mit einer Steuerelektrode, einer Bezugselektrode und einer Arbeitselektrode umfasst, wobei die Strecke Bezugselektrode - Arbeitselektrode des vierten elektronischen Schalters zwischen den ersten Verbindungspunkt und den Versorgungsanschluss (V2) der Ansteuerschaltung (HBD) gekoppelt ist, wobei die Steuerelektrode des vierten elektronischen Schalters (T1) über die Serienschaltung einer dritten Spannungsbegrenzungsvorrichtung (D1) und eines zweiten ohmschen Widerstands (R1) mit dem Bezugspotential gekoppelt ist.

6. Schaltungsanordnung nach Anspruch 5,
**dadurch gekennzeichnet,**
**dass** für die Durchbruchspannungen ($U_{D2}$, $U_{D4}$, $U_{D1}$) der ersten (D2), der zweiten (D4) und der dritten Spannungsbegrenzungsvorrichtung (D1) gilt:

$$U_{D2} \; < \; U_{D1} \; < \; U_{D4}.$$

7. Schaltungsanordnung nach einem der vorhergehenden Ansprüche,
**dadurch gekennzeichnet,**
**dass** der Inverter als Halbbrückenschaltung ausgebildet ist, wobei der Halbbrückenmittelpunkt die Wechselspannungsquelle darstellt.

8. Schaltungsanordnung nach einem der Ansprüche 5 bis 7,
**dadurch gekennzeichnet,**
**dass** die Schaltungsanordnung weiterhin eine vierte Spannungsbegrenzungsvorrichtung (D8) umfasst, die zwischen den ersten ohmschen Widerstand (R4) und den ersten Kondensator (C2) gekoppelt ist, wobei die Bezugselektrode des vierten elektronischen Schalters (T1) mit dem Verbindungspunkt des ersten ohmschen Widerstands (R4) und der vierten Spannungsbegrenzungsvorrichtung (D8) gekoppelt ist, wobei der Ausgang der Ladungspumpe (D5, D6, C5), die Bezugselektrode des ersten elektronischen Schalters (T2) und die Bezugselektrode des zweiten elektronischen Schalters (T4) mit dem Verbindungspunkt der vierten Spannungsbegrenzungsvorrichtung (D8) und des ersten Kondensators gekoppelt sind.

9. Schaltungsanordnung nach einem der vorhergehenden Ansprüche,
**dadurch gekennzeichnet,**
**dass** zwischen die Arbeitselektrode des ersten elektronischen Schalters (T2) und den Versorgungsanschluss (V1) der Steuervorrichtung (MC) ein Spannungsregler (T3, C3, D3, R3) gekoppelt ist.

10. Schaltungsanordnung nach einem der vorhergehenden Ansprüche,
**dadurch gekennzeichnet,**
**dass** zumindest die erste, die zweite, die dritte und die vierte Spannungsbegrenzungsvorrichtung (D2, D4, D1, D8) als Zenerdiode realisiert ist.

11. Schaltungsanordnung nach einem der vorhergehenden Ansprüche,
**dadurch gekennzeichnet,**
**dass** die erste Spannungsbegrenzungsvorrichtung (D2) seriell zwischen die Steuerelektrode des ersten elektronischen Schalters (T2) und die Arbeitselektrode des dritten elektronischen Schalters (T5) gekoppelt ist.

12. Schaltungsanordnung nach einem der Ansprüche 1 bis 10,
**dadurch gekennzeichnet,**
**dass** sie weiterhin einen dritten ohmschen Widerstand (R6) umfasst, der zwischen die Steuerelektrode des ersten elektronischen Schalters (T2) und die Arbeitselektrode des dritten elektronischen Schalters (T5) gekoppelt ist, wobei der dritte elektronische Schalter (T5) als MOSFET ausgebildet ist, wobei die erste Spannungsbegrenzungsvorrichtung (D2) einerseits mit dem Verbindungspunkt des dritten ohmschen Widerstands (R6) und der Arbeitselektrode des dritten elektronischen Schalters (T5) und andererseits mit dem ersten Verbindungspunkt gekoppelt ist.

13. Schaltungsanordnung nach einem der Ansprüche 1 bis 11,
**dadurch gekennzeichnet,**
**dass** zwischen die Steuerelektrode des dritten elektronischen Schalters (T5) und den Ausgang (A1) der Steuervorrichtung (MC) ein vierter ohmscher Widerstand (R5) gekoppelt ist.

14. Verfahren zum Umschalten einer Spannungsversorgung für eine Steuervorrichtung (MC) in einer Schaltungsanordnung mit einem Gleichspannungsversorgungsanschluss ($U_{ZW}$) zum Anschließen an eine Gleichspannungsquelle und einem Wechselspannungsversorgungsanschluss (HBM) zum Anschließen an eine Wechselspannungsquelle; **gekennzeichnet durch** folgende Schritte:

   a) Aufladen eines ersten Kondensators (C2), der unter Ausbildung eines ersten Verbindungspunkts über einen ersten ohmschen Widerstand mit dem Gleichspannungsversorgungsanschluss ($U_{ZW}$) gekoppelt ist;
   b) Bei Erreichen einer ersten vorgebbaren Spannungsschwelle der Spannung am ersten Kondensator (C2), die größer ist als die Minimalspannung zum Anlaufen einer Ansteuerschaltung (HBD) zur Ansteuerung der Schalter eines Inverters, wobei der Wechselspannungsversorgungsanschluss (HBM) mit einem von dem Inverter versorgten Wechselspannungspotential gekoppelt ist; und damit:

Aktivieren der Ansteuerschaltung (HBD) und damit Bereitstellen einer Wechselspannung am Wechselspannungsversorgungsanschluss (HBM);

c) Bei Erreichen einer zweiten vorgebbaren Spannungsschwelle der Spannung am ersten Kondensator (C2), die größer ist als die erste vorgebbare Spannungsschwelle:

Leitend-Schalten der Strecke Bezugselektrode - Arbeitselektrode eines ersten elektronischen Schalters (T4), wobei mit der Arbeitselektrode des ersten elektronischen Schalters der Versorgungsanschluss (V1) der Steuervorrichtung (MC) sowie mindestens ein weiterer Verbraucher (OP; DR) gekoppelt ist, wobei die Bezugselektrode des ersten elektronischen Schalters (T4) mit dem ersten Verbindungspunkt gekoppelt ist;

d) Eintreten eines Zustands zum Umschalten der Spannungsversorgung für die Steuervorrichtung (MC);

e) Leitend-Schalten eines zweiten, mit dem Ausgang (A1) der Steuervorrichtung (MC) gekoppelten elektronischen Schalters (T2), der seriell zwischen den ersten Verbindungspunkt und den Versorgungsanschluss (V1) der Steuervorrichtung (MC) gekoppelt ist; und
Klemmen der Spannung am ersten Kondensator (C2) mittels einer Spannungsbegrenzungsvorrichtung (D2) auf einen Wert, der kleiner ist als die Minimalspannung zum Anlaufen der Ansteuerschaltung (HBD) und damit:

Deaktivieren der Ansteuerschaltung (HBD); und
Nicht-Leitend-Schalten des ersten elektronischen Schalters (T4).

**Claims**

1. Circuit arrangement with a switchable voltage supply for a control apparatus, wherein the circuit arrangement comprises:

- a DC voltage supply terminal ($U_{ZW}$) for connection to a DC voltage source; and
- an AC voltage supply terminal (HBM) for connection to an AC voltage source;
- a first capacitor (C2), whose first terminal is coupled to the DC voltage supply terminal ($U_{ZW}$) via a first nonreactive resistor (R4) so as to form a first node, and whose second terminal is coupled to a reference potential;

- a drive circuit (HBD) for driving the switch of an inverter, wherein the drive circuit (HBD) has a supply terminal (V2), which is coupled to the first node;
- a control apparatus (MC), wherein the control apparatus (MC) comprises at least one input (E1; E2), an output (A1) and at least one supply terminal (V1);
- a charge pump (D5, D6, C5), whose input is coupled to the AC voltage supply terminal (HBM), and whose output is coupled to the first node, wherein the AC voltage supply terminal is coupled to an AC voltage source, which provides an AC voltage only when the inverter is in operation;
**characterized**
**in that** the circuit arrangement furthermore comprises:

- a first electronic switch (T2), a second electronic switch (T4) and a third electronic switch (T5), each having a control electrode, a reference electrode and a working electrode, wherein the reference electrode of the first electronic switch (T2) and of the second electronic switch (T4) is coupled to the first node;
- wherein the working electrode of the first electronic switch (T2) is coupled to the supply terminal (V1) of the control apparatus (MC);
- wherein the control electrode of the first electronic switch (T2) is coupled to the reference potential via a first voltage limiting apparatus (D2),
- wherein the control electrode of the first electronic switch (T2) is coupled to the working electrode of the third electronic switch (T5), wherein the control electrode of the third electronic switch (T5) is coupled to the output (A1) of the control apparatus (MC), and the reference electrode of the third electronic switch (T5) is coupled to the reference potential;
- wherein the control electrode of the second electronic switch (T4) is coupled to the reference potential via a second voltage limiting apparatus (D4);
- wherein the working electrode of the second electronic switch (T4) is coupled to the supply terminal (V1) of the control apparatus (MC) via a first diode (D7); and
- wherein at least one further load (OP; DR) is coupled to the working electrode of the second electronic switch (T4).

2. Circuit arrangement according to Claim 1, **characterized**

**in that** the breakdown voltage of the first voltage limiting apparatus (D2) is less than the breakdown voltage of the second voltage limiting apparatus (D4).

3. Circuit arrangement according to either of Claims 1 and 2,
   **characterized**
   **in that** the drive circuit (HBD) has a run up current, wherein the first nonreactive resistor (R4) has a value which is less than or equal to the quotient of the minimum voltage of the DC voltage source to be connected at the DC voltage supply terminal ($U_{ZW}$) and the maximum run up current.

4. Circuit arrangement according to one of the preceding claims,
   **characterized**
   **in that** a second capacitor (C4) is connected in parallel with the working electrode - reference potential path of the second electronic switch (T4).

5. Circuit arrangement according to one of the preceding claims,
   **characterized**
   **in that** the circuit arrangement furthermore comprises a fourth electronic switch (T1) with a control electrode, a reference electrode and a working electrode, wherein the reference electrode - working electrode path of the fourth electronic switch is coupled between the first node and the supply terminal (V2) of the drive circuit (HBD), wherein the control electrode of the fourth electronic switch (T1) is coupled to the reference potential via the series circuit comprising a third voltage limiting apparatus (D1) and a second nonreactive resistor (R1).

6. Circuit arrangement according to Claim 5,
   **characterized**
   **in that** the following is true for the breakdown voltages ($U_{D2}$, $U_{D4}$, $U_{D1}$) of the first voltage limiting apparatus (D2), the second voltage limiting apparatus (D4) and the third voltage limiting apparatus (D1):

$$U_{D2} \; < \; U_{D1} \; < \; U_{D4}.$$

7. Circuit arrangement according to one of the preceding claims,
   **characterized**
   **in that** the inverter is in the form of a half-bridge circuit, wherein the half-bridge center point represents the AC voltage source.

8. Circuit arrangement according to one of Claims 5 to 7,
   **characterized**

**in that** the circuit arrangement furthermore comprises a fourth voltage limiting apparatus (D8), which is coupled between the first nonreactive resistor (R4) and the first capacitor (C2), wherein the reference electrode of the fourth electronic switch (T1) is coupled to the node between the first nonreactive resistor (R4) and the fourth voltage limiting apparatus (D8), wherein the output of the charge pump (D5, D6, C5), the reference electrode of the first electronic switch (T2) and the reference electrode of the second electronic switch (T4) are coupled to the node between the fourth voltage limiting apparatus (D8) and the first capacitor.

9. Circuit arrangement according to one of the preceding claims,
   **characterized**
   **in that** a voltage regulator (T3, C3, D3, R3) is coupled between the working electrode of the first electronic switch (T2) and the supply termainl (V1) of the control apparatus (MC).

10. Circuit arrangement according to one of the preceding claims,
    **characterized**
    **in that** at least the first, the second, the third and the fourth voltage limiting apparatus (D2, D4, D1, D8) is in the form of a zener diode.

11. Circuit arrangement according to one of the preceding claims,
    **characterized**
    **in that** the first voltage limiting apparatus (D2) is coupled in series between the control electrode of the first electronic switch (T2) and the working electrode of the third electronic switch (T5).

12. Circuit arrangement according to one of Claims 1 to 10,
    **characterized**
    **in that** it furthermore comprises a third nonreactive resistor (R6), which is coupled between the control electrode of the first electronic switch (T2) and the working electrode of the third electronic switch (T5), wherein the third electronic switch (T5) is in the form of a MOSFET, wherein the first voltage limiting apparatus (D2) is coupled firstly to the node between the third nonreactive resistor (R6) and the working electrode of the third electronic switch (T5) and secondly to the first node.

13. Circuit arrangement according to one of Claims 1 to 11,
    **characterized**
    **in that** a fourth nonreactive resistor (R5) is coupled between the control electrode of the third electronic switch (T5) and the output (A1) of the control apparatus (MC).

**14.** Method for switching over a voltage supply for a control apparatus (MC) in a circuit arrangement having a DC voltage supply terminal (U_{ZW}) for connection to a DC voltage source and an AC voltage supply terminal (HBM) for connection to an AC voltage source;

**characterized by** the following steps:

a) charging of a first capacitor (C2), which is coupled to the DC voltage supply terminal (U_{ZW}) via a first nonreactive resistor so as to form a first node;

b) on reaching a first predeterminable voltage threshold for the voltage across the first capacitor (C2), which voltage threshold is greater than the minimum voltage for run up of a drive circuit (HBD) for driving the switches of an inverter, wherein the AC voltage supply terminal (HBM) is coupled to an AC voltage potential supplied by the inverter:

activation of the drive circuit (HBD) and therefore provision of an AC voltage at the AC voltage supply terminal (HBM);

c) on reaching a second predeterminable voltage threshold for the voltage across the first capacitor (C2), which voltage threshold is greater than the first predeterminable voltage threshold:

switching on of the reference electrode - working electrode path of a first electronic switch (T4), wherein the supply terminal (V1) of the control apparatus (MC) and at least one further load (OP; DR) is coupled to the working electrode of the first electronic switch, wherein the reference electrode of the first electronic switch (T4) is coupled to the first node;

d) onset of a state for switching over the voltage supply for the control apparatus (MC);

e) switching on of a second electronic switch (T2), which is coupled to the output (A1) of the control apparatus (MC) and is coupled in series between the first node and the supply terminal (V1) of the control apparatus (MC); and clamping of the voltage across the first capacitor (C2) by means of a voltage limiting apparatus (D2) to a value which is less than the minimum voltage for run up of the drive circuit (HBD) and therefore:

deactivation of the drive circuit (HBD); and switching off of the first electronic switch (T4).

**Revendications**

**1.** Circuit comprenant une alimentation en courant commutable pour un dispositif de commande, le circuit comprenant :

- un raccordement d'alimentation en tension continue (U_{ZW}) pour le raccordement à une source de tension continue ; et
- un raccordement d'alimentation en tension alternative (HBM) pour le raccordement à une source de tension alternative ;
- un premier condensateur (C2) dont la première borne est couplée au raccordement d'alimentation en tension continue (U_{ZW}) par le biais d'une première résistance ohmique (R4), formant un premier point de connexion, et dont la seconde borne est couplée à un potentiel de référence ;
- un circuit de commande (HBD) pour la commande des commutateurs d'un inverseur, le circuit de commande (HBD) étant pourvu d'un raccordement d'alimentation (V2) qui est couplé au premier point de connexion ;
- un dispositif de commande (MC), le dispositif de commande (MC) étant pourvu d'au moins une entrée (E1 ; E2), d'une sortie (A1) et d'au moins un raccordement d'alimentation (V1) ; **caractérisé en ce que** le circuit comprend, en outre :
- une pompe de charge (D5, D6, C5) dont l'entrée est couplée au raccordement d'alimentation en tension alternative (HBM) et dont la sortie est couplée au premier point de connexion, le raccordement d'alimentation en tension alternative étant couplé à une source de tension alternative qui ne fournit une tension alternative que lorsque l'inverseur fonctionne ;
- un premier (T2), un deuxième (T4) et un troisième (T5) commutateurs électroniques possédant à chaque fois une électrode de commande, une électrode de référence et une électrode de travail, l'électrode de référence du premier (T2) et du deuxième (T4) commutateurs électroniques étant couplée au premier point de connexion ;
- l'électrode de travail du premier commutateur électronique (T2) étant couplée au raccordement d'alimentation (V1) du dispositif de commande (MC) ;
- l'électrode de commande du premier commutateur électronique (T2) étant couplée au potentiel de référence par le biais d'un premier dispositif limiteur de tension (D2),
- l'électrode de commande du premier commutateur électronique (T2) étant couplée à l'électrode de travail du troisième commutateur électronique (T5), l'électrode de commande du troisième commutateur électronique (T5) étant couplée à la sortie (A1) du dispositif de commande (MC) et l'électrode de référence du troisième commutateur électronique (T5) étant couplée au potentiel de référence ;
- l'électrode de commande du deuxième commutateur électronique (T4) étant couplée au potentiel de référence par le biais d'un deuxième dispositif limiteur de tension (D4) ;
- l'électrode de travail du deuxième commutateur électronique (T4) étant couplée au raccordement d'alimentation (V1) du dispositif de commande (MC) par le biais d'une première diode (D7) ; et
- au moins un consommateur supplémentaire (OP ; DR) étant couplé à l'électrode de travail du deuxième commutateur électronique (T4).

2. Circuit selon la revendication 1,
**caractérisé**
**en ce que** la tension de claquage du premier dispositif limiteur de tension (D2) est inférieure à la tension de claquage du deuxième dispositif limiteur de tension (D4).

3. Circuit selon l'une des revendications 1 ou 2,
**caractérisé**
**en ce que** le circuit de commande (HBD) a un courant de démarrage, la première résistance ohmique (R4) étant inférieure ou égale au quotient du courant minimum de la source de tension continue à brancher au raccordement d'alimentation en tension continue ($U_{ZW}$) et du courant de démarrage maximum.

4. Circuit selon l'une des revendications précédentes,
**caractérisé**
**en ce qu'**un second condensateur (C4) est monté en parallèle avec le trajet électrode de travail - potentiel de référence du deuxième commutateur électronique (T4).

5. Circuit selon l'une des revendications précédentes,
**caractérisé**
**en ce que** le circuit comprend, en outre, un quatrième commutateur électronique (T1) possédant une électrode de commande, une électrode de référence et une électrode de travail, le trajet électrode de référence - électrode de travail du quatrième commutateur électronique étant couplé entre le premier point de connexion et le raccordement d'alimentation (V2) du circuit de commande (HBD), l'électrode de commande du quatrième commutateur électronique (T1) étant couplée au potentiel de référence par le biais du montage en série d'un troisième dispositif limiteur de tension (D1) et d'une deuxième résistance ohmique (R1).

6. Circuit selon la revendication 5,
**caractérisé**

**en ce que** la formule :

$$U_{D2} \; < \; U_{D1} \; < \; U_{D4}$$

s'applique aux tensions de claquage ($U_{D2}$, $U_{D4}$, $U_{D1}$) du premier (D2), du deuxième (D4) et du troisième (D1) dispositifs limiteurs de tension.

7. Circuit selon l'une des revendications précédentes,

**caractérisé**
**en ce que** l'inverseur est exécuté en tant que circuit en demi-pont, le point central du demi-pont représentant la source de tension alternative.

8. Circuit selon l'une des revendications 5 à 7,
**caractérisé**
**en ce que** le circuit comprend, en outre, un quatrième dispositif limiteur de tension (D8) qui est couplé entre la première résistance ohmique (R4) et le premier condensateur (C2), l'électrode de référence du quatrième commutateur électronique (T1) étant couplée au point de connexion de la première résistance ohmique (R4) et du quatrième dispositif limiteur de tension (D8), la sortie de la pompe de charge (D5, D6, C5), l'électrode de référence du premier commutateur électronique (T2) et l'électrode de référence du deuxième commutateur électronique (T4) étant couplées au point de connexion du quatrième dispositif limiteur de tension (D8) et du premier condensateur.

9. Circuit selon l'une des revendications précédentes,
**caractérisé**
**en ce qu'**un régulateur de tension (T3, C3, D3, R3) est couplé entre l'électrode de travail du premier commutateur électronique (T2) et le raccordement d'alimentation (V1) du dispositif de commande (MC).

10. Circuit selon l'une des revendications précédentes,
**caractérisé**
**en ce qu'**au moins le premier, le deuxième, le troisième et le quatrième dispositif limiteur de tension (D2, D4, D1, D8) est réalisé en tant que diode Zener.

11. Circuit selon l'une des revendications précédentes,
**caractérisé**
**en ce que** le premier dispositif limiteur de tension (D2) est couplé en série entre l'électrode de commande du premier commutateur électronique (T2) et l'électrode de travail du troisième commutateur électronique (T5).

12. Circuit selon l'une des revendications 1 à 10,
**caractérisé**
**en ce qu'**il comprend, en outre, une troisième résistance ohmique (R6) qui est couplée entre l'électrode de commande du premier commutateur électronique (T2) et l'électrode de travail du troisième commutateur électronique (T5), le troisième commutateur électronique (T5) étant exécuté en tant que MOSFET, le premier dispositif limiteur de tension (D2) étant couplé, d'une part, au point de connexion de la troisième résistance ohmique (R6) et de l'électrode de travail du troisième commutateur électronique (T5) et, d'autre part, au premier point de connexion.

13. Circuit selon l'une des revendications 1 à 11, **caractérisé en ce qu'**une quatrième résistance ohmique (R5) est couplée entre l'électrode de commande du troisième commutateur électronique (T5) et la sortie (A1) du dispositif de commande (MC).

14. Procédé de commutation d'une alimentation en courant pour un dispositif de commande (MC) dans un circuit comprenant un raccordement d'alimentation en tension continue ($U_{ZW}$) pour le raccordement à une source de tension continue et un raccordement d'alimentation en tension alternative (HBM) pour le raccordement à une source de tension alternative ; **caractérisé par** les étapes suivantes :

   a) chargement d'un premier condensateur (C2) qui est couplé au raccordement d'alimentation en tension continue ($U_{ZW}$) par le biais d'une première résistance ohmique, formant un premier point de connexion ;
   b) lorsqu'on atteint un premier seuil de tension, pouvant être prédéfini, de la tension aux bornes du premier condensateur (C2) qui est plus élevé que la tension minimale de démarrage d'un circuit de commande (HBD) destiné à commander les commutateurs d'un inverseur, le raccordement d'alimentation en tension alternative (HBM) étant couplé à un potentiel de tension alternative alimenté par l'inverseur ; et ainsi ; activation du circuit de commande (HBD) et, ainsi, fourniture d'une tension alternative aux bornes du raccordement d'alimentation en tension alternative (HBM) ;
   c) lorsqu'on atteint un second seuil de tension, pouvant être prédéfini, de la tension aux bornes du premier condensateur (C2) qui est supérieur au premier seuil de tension pouvant être prédéfini :
   mise à l'état conducteur du trajet électrode de référence - électrode de travail d'un premier commutateur électronique (T4), le raccordement d'alimentation (V1) du dispositif de commande (MC) et au moins un consommateur supplémentaire (OP ; DR) étant couplés à l'électrode de travail du premier commutateur électronique, l'électrode de référence du premier commutateur électronique (T4) étant couplée au premier point de connexion ;
d) établissement d'un état pour commuter l'alimentation en courant du dispositif de commande (MC) ;
e) mise à l'état conducteur d'un deuxième commutateur électronique (T2), couplé à la sortie (A1) du dispositif de commande (MC), qui est couplé en série entre le premier point de connexion et le raccordement d'alimentation (V1) du dispositif de commande (MC) ; et
blocage de la tension aux bornes du premier condensateur (C2) au moyen d'un dispositif limiteur de tension (D2) à une valeur qui est inférieure à la tension minimale de démarrage du circuit de commande (HBD), et ainsi :

   désactivation du circuit de commande (HBD) ; et
   mise à l'état non conducteur du premier commutateur électronique (T4) .

FIG 1

FIG 2

FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1231821 A1

- DE 19542012 A1